# EUROPÄISCHE PATENTSCHRIFT

(11) **EP 1 410 125 B1**
(45) Veröffentlichungstag und Bekanntmachung des Hinweises auf die Patenterteilung: **04.10.2006**
(21) Anmeldenummer: 02764512.6
(22) Anmeldetag: 12.07.2002
(51) Int. Cl.: G05D 1/10

(54) **FAHRZEUG-FÜHRUNGSSYSTEM ZUR AUTOMATISCHEN FAHRZEUG-FÜHRUNG**
VEHICLE GUIDANCE SYSTEM AND METHOD FOR CARRYING OUT AN AUTOMATIC VEHICLE GUIDANCE OPERATION
SYSTEME DE GUIDAGE DE VEHICULE ET PROCEDE DE MISE EN OEUVRE DE GUIDAGE AUTOMATIQUE DE VEHICULE

(30) Priorität: 13.07.2001 DE 10134055
(43) Veröffentlichungstag der Anmeldung: 21.04.2004
(73) Patentinhaber: EADS Deutschland GmbH, 85521 Ottobrunn (DE)
(72) Erfinder: SEIFERT, Jost, 83727 Schliersee (DE)
(86) Internationale Anmeldenummer: PCT/DE2002/002566
(87) Internationale Veröffentlichungsnummer: WO 2003/007100

(56) Entgegenhaltungen:
- WO-A-01/48573
- DE-A- 1 815 370
- DE-A- 2 713 140
- DE-A- 19 604 931
- US-A- 4 040 374
- US-A- 4 811 230

## Beschreibung

Die Erfindung betrifft ein Fahrzeug-Führungssystem und ein Verfahren zur Durchführung einer automatischen Fahrzeug-Führung, wobei sich die Erfindung grundsätzlich auf alle Arten von Fahrzeugen wie Kraftfahrzeuge, Schiffe und insbesondere auch auf Flugzeuge bezieht.

Bei automatischen Fahrzeug-Führungen werden Regelschleifen realisiert, die der eigentlichen Fahrzeug-Regelung oder -Steuerung übergeordnet sind. Beispielsweise geht es bei einer Fahrzeug-Führung darum, Zielvorgaben zum Zwecke der Navigation einzuhalten. Insbesondere sind bei modemen Flugzeugen mit automatischer Regelung, die mit Hilfe der sogenannten Fly-by-wire-Steuerungssysteme realisiert wird, den Flugsteuerungsfunktionen Autopiloten-Funktionen überlagert. Die Regelung enthält dabei auf der Basis eines Kommandozweigs, z.B. aufgrund der vom Piloten kommandierten Vertikal-Beschleunigungen, Rückführungen zur Stabilisierung des Regelkreises. Die diesen Regelungsfunktionen regelungstechnisch überlagernden Autopiloten-Betriebsarten können sich auf verschiedene Flugphasen, wie beispielsweise auf den Geländefolgeflug beziehen, bei dem eine vorgegebene Höhe über Grund einzuhalten ist. Auch können für Navigations- oder für Lande-Anflugverfahren bestimmte Flugbahnen vorgegeben sein, deren Einhaltung durch das Flugzeug mittels automatischer Autopiloten-Betriebsarten bewerkstelligt wird.

Allgemein wird bei diesen Autopiloten-Betriebsarten für jeweils vorgesehene Einsatzarten des Fahrzeugs üblicherweise ein Soll-Parameter, wie eine Soll-Geschwindigkeit, eine Soll-Höhe oder eine vorgegebene Fahrtrichtung eingestellt, dessen Einhaltung der Kommandozweig der jeweiligen Autopiloten-Funktion bewerkstelligt. Dabei hat der Pilot also die Möglichkeit, in Abhängigkeit der jeweiligen Flugsituation Soll-Parameter zu wählen und vorgegebene Betriebsarten anzuwählen, die das Flugzeug dann ohne manuelles Eingreifen des Piloten ausführen kann.

Ein Nachteil dieser Verfahren ist, daß dem Pilot nur eine begrenzte Anzahl von vordefinierten Autopiloten-Betriebsarten zur Verfügung steht. Bei zukünftigen Fahrzeug-Führungssystemen, bei denen das Erfordernis nach einer Zunahme der Anzahl der vorzusehenden Autopiloten-Betriebsarten sowie erhöhte Anforderungen an die Flexibilität solcher Betriebsarten besteht, ist die Funktionalität heutiger Autopiloten beschränkt.

In den Druckschriften BROCKHAUS, Rudolf: Flugregelung, Springer Verlag 1994, ISBN 3-540-554 16-5, Kapitel 17.4.1 (Seiten 632-634), Kapitel 20.3.4 (Seiten 734-738), DE 37 83 535 T2, DE 196 04 931 A1 und WO 01/48573 A1 sind Flugmangament-Systeme beschrieben, mit denen Einsatzphasen durchlaufen werden, die beeinflussbar sind. Es ist die Aufgabe der Erfindung, ein automatisches Fahrzeug-Führungssystem sowie ein Verfahren zur Durchführung einer automatischen Fahrzeug-Führung zu schaffen, die mit geringem Aufwand auf eine Vielzahl von Einsatzarten einstellbar ist.

Erfindungsgemäß werden nicht mehr fest vorgegebene Betriebsarten, wie es im Stand der Technik vorgesehen ist, in das betreffende Fahrzeug-Führungssystem implementiert, sondern es wird zumindest ein mittels eines Einsatz-Skriptes und einer Regler-Matrix konfigurierbarer Basis- oder Bahn-Regler verwendet, der eine Gestaltung einer Führungs-Funktion und somit einer Autopiloten-Betriebsart in Abhängigkeit einer Einsatzart oder Einsatzphase des Fahrzeugs erlaubt. Dadurch können insbesondere abhängig von vorgegebenen Einsatzarten oder Änderungen von Einsatzarten oder -phasen Autopiloten-Betriebsarten auch während des Einsatzes definiert und in einem bestehenden Bahnführungs-System aktiviert werden. Vorteilhaft an der Erfindung ist, daß die Gestaltung oder Definition von Autopiloten-Betriebsarten auch während des Einsatzes des Fahrzeugs vom Piloten oder weiteren Nutzern vorgenommen werden kann.

Ein weiterer Vorteil der Erfindung ist, daß mit Hilfe des erfindungsgemäßen Verfahrens der Fahrzeug-Weg sowie auch Abläufe des Fahrzeug-Einsatzes und insbesondere Flugzeug-Manöver reproduziert werden können. Insbesondere bei Flugzeugen ist es dadurch beispielsweise möglich, ganze Einsatz- oder Missions-Abläufe auf eine größere Anzahl von Fluggeräten oder Flugzeugen unabhängig vom jeweiligen Typ zu übertragen oder diese mehrfach auszuführen. Dies kann bei der Durchführung von Simulationen vorteilhaft verwendet werden.

Auch ist ein Vorteil der Erfindung, daß gegenüber bekannten Autopiloten-Betriebsarten eine größere Funktionalität erreichbar ist, daß heißt es ergeben sich aufgrund einer Kombination von Basisreglern eine größere Anzahl von Betriebsarten, die zudem noch speziell an die jeweilige Einsatzphase anpaßbar sind.

Durch einen hierarchischen Aufbau des erfindungsgemäßen Fahrzeug-Bahnführungssystems kann dieses an jedes Fahrzeug schnell angepaßt werden. Lediglich die Basisregler müssen Fahrzeug-typisch ausgelegt werden.

Mit der erfindungsgemäßen Lösung ist es weiterhin möglich, in vielen Bereichen der Fahrzeugtechnik den Piloten zu ersetzen und somit unbemannte Fahrzeuge für einen größeren Einsatzbereich verfügbar zu machen.

Ebenso ist es möglich Fahrzeuge und Einsatzarten derselben zu reproduzieren und zu Simulationszwecken zu verwenden. In weiteren Simulationen können komplexe Verkehrssituationen mit vielen beteiligten Fahrzeugen exakt wiederholt oder simuliert werden, ohne daß eine Datenaufzeichnung erforderlich wäre.

Im folgenden wird die Erfindung anhang der beiliegenden Figuren beschrieben, die zeigen:
- Figur 1 eine funktionale Darstellung des erfindungsgemäßen Fahrzeug-Führungssystems und dessen Integration in ein Fahrzeug-System,
- Figur 2 eine funktionale Darstellung für eine weitere Ausführungsform des erfindungsgemäßen Fahrzeug-Führungssystems,
- Figur 3 eine beispielhafte Darstellung einer Regler- oder Logik-Matrix zur Schaltung von zumindest einem Bahn-Regler, mit der eine Betriebsart erfindungsgemäß konfiguriert oder definiert wird.

Bei dem erfindungsgemäßen Fahrzeug-Bahnführungssystem 1 ist eine Eingabefunktion 2 für eine Regler- oder Logik-Matrix, eine Skript-Erstellungsfunktion 3 und eine Einsatz-Steuerung 4 vorgesehen. Die Skript-Erstellungsfunktion 3 ist dazu vorgesehen, aufgrund Skript-Eingaben 3a, die von einem Nutzer vorgenommen werden, ein Einsatz-Skript in Form eines Datensatzes zur Beschreibung von Soll-Vorgaben von Einsatzphasen, nach denen das Fahrzug zu führen ist, über eine funktionale Verbindung 7 an die Einsatz-Steuerung 4 zu liefern. Von der Eingabe-Funktion 2 werden auf der Basis verfügbarer Bahn-Regler und in Betracht kommender Einsatzphasen bzw. Soll-Vorgaben eine Regler- oder Logik-Matrix erstellt, die über eine funktionale Verbindung 6 ebenfalls an die Einsatz-Steuerung 4 übermittelbar ist.

Das in der Skripterstellungs-Funktion 3 definierte Einsatz-Skript oder Skript beschreibt Einsatzphasen oder Bahn-Abschnitte in deren zeitlichen und logischen Ablauf, nach denen das Fahrzeug mittels des erfindungsgemäßen Fahrzeug-Führungssystem 1 geführt werden soll. Das Einsatz-Skript beschreibt zumindest eine Einsatzphase und vorzugsweise mehrere Einsatzphasen nach zumindest einer für die jeweilige Einsatzphase vorgesehenen Soll-Vorgabe. Auch der logische und / oder zeitliche Ablauf der Einsatzphasen ist durch das Einsatz-Skript festgelegt. Dies kann durch die Anordnung, z.B. eine zeilenweise Anordnung einer Beschreibung der Einsatzphasen erfolgen. Jede Zeile kann dabei als Kommandozeile für die betreffende Einsatzphase angesehen werden.

Als Beispiel für eine zeilenweise Anordnung von in einer Skriptsprache beschriebenen Einsatzphasen eines Fahrzeugs werden nachfolgend Einsatzphasen eines Fluggerätes aufgeführt, wie sie in einem erfindungsgemäßen Einsatz-Skript vorgesehen sein können. Die Erstellung des Einsatz-Skriptes kann mit einem Texteditor vorgenommen werden.
Init (Position X,Y,Z, Geschwindigkeit = 0, Kurs = 180)
Start (Geschwindigkeit = 120, Kurs = 180)
Steigflug (Geschwindigkeit = 130, Kurs = 90, Höhe = 3000)
Reiseflug (Geschwindigkeit = 200, Kurs =110, Höhe = 5000)
Rechtskurve (Geschwindigkeit = 200, Kurs = 180, Höhe = 5000,
Rollwinkel = 60)
M3 ()
Landung (Geschwindigkeit = 120, Kurs = 70, Position X,Y,Z)

Hierbei bedeutet: "Init" eine erste Phase oder der Beginn des Einsatzes. Die Zahlenwerte stellen Werte in vorbestimmten Einheiten dar. Der Ausdruck "Position X,Y,Z" steht stellvertretend für eine bestimmte, in räumlichen Koordinaten festgelegte Postion. Anstatt der Bezeichnung der Einsatzphase (z.B. *Start*) kann auch ein Index auf die entsprechende Zeile in der Regler-Matrix verwendet werden. Beispielsweise bedeutet M3(), daß die Einsatzphase gemäß Zeile 3 der Regler-Matrix zu verwenden ist.

Eine Einsatzphase wird im Einsatz-Skript mit einem vordefinierten Kommando mit freien Übergabeparametem beschrieben. Bei der Ausführung eines Kommandos, in dem kein Wert festgelegt ist, können voreingestellte Werte verwendet werden, die entweder in der Regler-Steuerung 10 oder in den jeweiligen Bahnreglern abgespeichert sind.

Die durch das Einsatz-Skript beschriebene Abfolge von Einsatzphasen oder Bahnabschnitten wird von der Einsatz-Steuerung 4 kontrolliert und zeilenweise über eine funktionale Verbindung 8a an eine Regler-Steuerung 10 übermittelt, der die Einsatzphasen sukzessiv nach der im Skript vorgegebenen Reihenfolge über eine funktionale Verbindung 11 an zumindest einen Bahn- oder Basis-Regler 12 zur Abarbeitung durch diesen modifiziert oder nicht modifiziert weiterleitet.

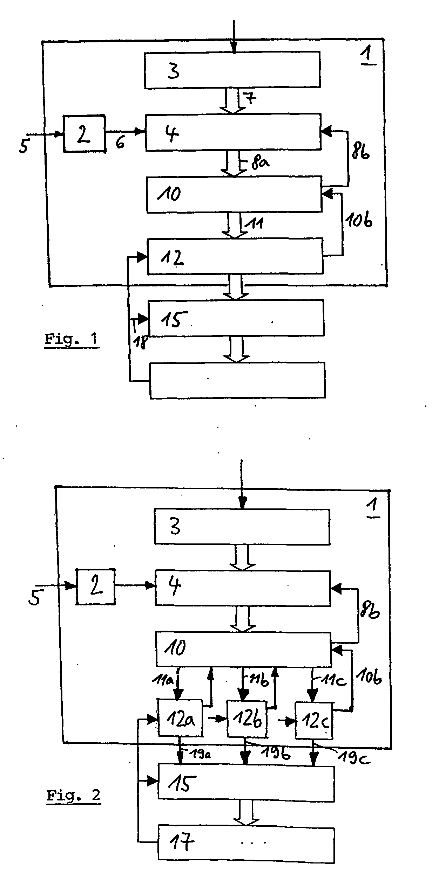

Sind mehrere, also mindestens zwei Bahn-Regler 12 im Fahrzeug-Führungssystem 1 angeordnet, ist jeweils eine funktionale Verbindung 11 von dem Bahnregler zu jeweils einem Bahn-Regler 12 vorgesehen. In der Figur 2 ist eine Ausführungsform des Fahrzeug-Führungssystems 1 mit drei Bahn-Reglern 12a, 12b, 12c dargestellt, die jeweils über eine funktionale Verbindung 11a, 11b bzw. 11 c mit der Regler-Steuerung 10 in Verbindung stehen. Die im Skript abgelegten Bahnabschnitt-Vorgaben werden in der nach dem Skript vorgesehenen Abfolge über die jeweilige Verbindung 11a, 11b bzw. 11c an den jeweils zuständigen Bahn-Regler 12a, 12b oder 12c übermittelt.

Die von der Einsatz-Steuerung 4 an die Regler-Steuerung 10 übermittelte Logik- oder Regler-Matrix enthält die Information darüber, welcher Bahn-Regler 12 bzw. 12a, 12b, 12c zur Durchführung der Bahnführung für jeden im Einsatz-Skript beschriebenen Bahn-Abschnitt zu benutzen ist. Die Regler-Matrix kann fest vorgegeben sein, da die für ein erfindungsgemäßes Bahn-Führungssystem vorgesehenen Bahn-Regler in diesem implementiert sind, um für eine entprechende Einsatzphase aktivierbar zu sein. Sie kann jedoch auch mit Hilfe der Eingabefunktion 2 für bestimmte Einsatzphasen, insbesondere für speziell definierte Einsätze, modifizierbar oder überhaupt insgesamt erstellbar oder konfigurierbar sein. Mittels der Eingabefunktion 2 kann ein Nutzer des Fahrzeugs, also z.B. ein Pilot, oder ein anderer Nutzer, z.B. mit einer Fahrzeug-gestützten Bedienungseinrichtung oder in einer Bodenstation, die Reglermatrix jederzeit, also auch während einer Einsatzphase des Fahrzeugs, ändern oder ergänzen oder neu erstellen. Das gleichfalls von der Einsatz-Steuerung 4 an die Regler-Steuerung 10 übermittelte Einsatz-Skript gibt vor, nach welchen Sollwerten der jeweilige Bahn-Regler die Bahnführung in der betreffenden Einsatzphase zu bewerkstelligen hat. Mittels der in der Regler-Steuerung 10 abgelegten Regler-Matrix werden also für die jeweils aktuelle Einsatzphase der darin benötigte Bahn-Regler durch die Regler-Steuerung 10 aktiviert oder nicht benötigte Bahn-Regler de-aktiviert. Die Regler-Matrix, die an die Einsatz-Steuerung 4 übermittelt wird, dient zur Schaltung der benötigten Bahn-Regler 12 bzw. 12a, 12b oder 12c. Es enthält die Information, welche Bahn-Regler in einer Einsatzphase zu benutzen sind. Hierdurch werden auch Konflikte verhindert, die entstehen könnten, wenn zwei ähnliche aber nicht kompatible Bahnregler gleichzeitig aktiviert würden. Im Einsatz-Skript ist demgegenüber festgelegt, nach welchen Sollwerten oder Soll-Vorgaben in jeder Einsatzphase jeweils diese Bahn-Regler regeln sollen.

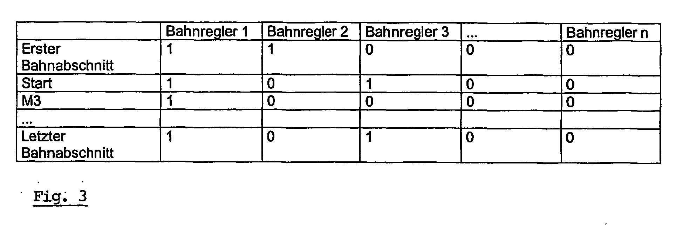

Eine unvollständige Darstellung einer beispielhaften Regler-Matrix ist in der Figur 3 dargestellt. In dieser sind zeielnweise Bahnabschnitte und spaltenweise die Verwedung von Bahnreglern eingetragen. Dabei bedeutet die Ziffer "1", daß der Bahnregler der betreffenden Spalte der Matrix zur Bahnregelung in der durch die jeweilige Zeile betreffenden Einsatzphase benötigt wird, während die Ziffer "0" bedeutet, daß der durch die Spalte bestimmte Bahn-Regler in der durch die Zeile bestimmten Einsatzphase nicht benötigt wird.

Die Regler-Matrix liegt als Datensatz vor. Dabei muß die Daten-Struktur des Datensatzes nicht die Matrix-Form aufweisen. Bei der Regler-Matrix kann auch beispielsweise in logischer oder anderer Form eine Zuordnung zwischen Bahn-Reglern und Einsatzphasen bewerkstelligt werden. Diese Zuordnung kann auch Hardware-mäßig durch eine entsprechende Kopplung der jeweiligen Bahn-Regler erfolgen. Wesentlich ist eine Zuordnung zwischen den implementierten, von einer Regler-Steuerung 10 aktivierbaren und de-aktivierbaren Bahn-Reglern und den Einsatzphasen, für die das Fahrzeug in einer automatischen Betriebsart zu betreiben ist.

Jeder Bahn-Regler 12 bzw. 12a, 12b, 12c regelt die Bahn des Fahrzeugs nach den im Einsatz-Skript abgespeicherten Sollbahn-Werten oder Soll-Vorgaben, die für diejenigen Einsatzphasen vorliegen, für die das Bahnführungssystem aktiv sein soll. Die Regelgröße ist einer der Freiheitsgrade im fahrzeugfesten oder bahnfesten Koordinatensystem oder Ableitungen davon oder daraus ermittelt Größen wie z.B. die Flughöhe. Der Bahn-Regler kontrolliert zudem, ob Fahrzeugtypische Systemgrenzen, wie zum Beispiel eine Höchstgeschwindigkeit, überschritten werden, und hält das Fahrzeug innerhalb eines für dieses System zulässigen Bereich. Mittels der Regler-Matrix erfolgt für die jeweilige Einsatzphase des Fahrzeugs eine Zuordnung des diese Einsatzphase vorgesehenen BahnReglers 12 bzw. 12a, 12b oder 12c. Hierzu wird die Regler-Matrix von der Einsatz-Steuerung 4 über die Verbindung 8a an die Regler-Steuerung 10 übermittelt, die die Zuordnung der Bahn-Regler 12 bzw. 12a, 12b oder 12c vornimmt. Von dort gelangen die Soll-Vorgaben, nach denen die Bahn-Regler arbeiten sollen, über eine Verbindung 11 a an den bzw. die Bahn-Regler, für die die jeweiligen Soll-Vorgaben bestimmt sind. Beispielsweise erhält ein Flughöhen-Regler eines Flugzeugs eine Soll-Höhe als Soll-Vorgabe. Der Status des jeweils aktiven BahnReglers wird über die Verbindung 10b kontinuierlich oder in Zeitabständen an die Regler-Steuerung 10 gesandt, der vorzugsweise aus aktuellen internen Reglergrößen vorzugsweise im jeweiligen Bahn-Regler ermittelt wird. Aus diesem kann gegebenenfalls die Beendigung der Einsatzphase abgeleitet werden. Wenn beispielsweise in einer bestimmten Flugphase eine Soll-Position oder eine Soll-Geschwindigkeit zu erreichen ist, entnimmt die Regler-Steuerung den Positions- bzw. Geschwindigkeits-Daten direkt, ob die Einsatzphase zu beenden ist. In Bezug auf die Beendigung der jeweiligen Einsatzphase können auch andere, von Fahrzeug-Zustandsgrößen unabhängige Vorgaben, wie z.B. Zeit-Vorgaben bestehen, die dann die Regler-Steuerung 10 oder die Einsatz-Steuerung 4 abfragen kann.

Eine Einsatzphase kann also beendet werden, wenn zumindest ein Sollwert eines Bahn- Reglers 12 erreicht wurde. Alternativ dazu kann auch die Dauer der Einsatzphase limitiert werden. Hierbei mißt der Bahnregler die Zeit seit seiner Aktivierung durch die Reglersteuerung 10, und vergleicht sie mit der Vorgabe aus dem Einsatz- Skript (z.B. t < 60 sec). Bei Überschreitung der Zeitvorgabe veranlaßt der Bahnregler 12 über die Verbindung 10b die Regler-Steuerung 10 ihrerseits die Rückmeldung "Einsatzphase beendet" 8b an die Einsatz- Steuerung 4 zu senden. Genauso denkbar ist eine Überprüfung von Schalterstellungen oder Zuständen durch die Bahnregler 12 mit dem Ziel das Ende einer Einsatzphase zu bestimmen und weiterzuleiten.

Die Einsatz-Steuerung 4 erhält von der Regler-Steuerung 10 über die Verbindung 8b also eine Rückmeldung, ob die jeweilige Einsatzphase beendet worden ist. Trifft dies zu, wird die Kommandozeile für die nächste Einsatzphase an die Einsatz-Steuerung 4 übergeben. Nach Abarbeitung des gesamten Einsatz-Skriptes wird die Bahnführung des Fahrzeugs beendet. Die Einsatz-Steuerung 4 bietet die Möglichkeit Informationen über das aktuelle Manöver an den Operator zu übergeben, damit dieser die Mission mitverfolgen kann. Die Steuerung oder Kontrolle der Einsatz-Steuerung 4 erfolgt automatisch oder per Fernbedienung. Es können dazu Funktionen wie "AN / AUS" zum Ein- und Ausschalten der Betriebsart oder der Bahnführungs-Funktionen insgesamt und "ZEILE ÜBERSPRINGEN" zum Verändern der im Einsatz-Skript angegebenen Reihenfolge zur Verfügung stehen. Beim "INITIALISIEREN" wird das aktuell verfügbare Einsatz-Skript und die Regler-Matrix sowie Startwerte der vorgegebenen Betriebsarten aus Voreinstellungen oder dem Einsatz-Skript in die Einsatz-Steuerung 4 eingelesen.

Bei dem Bahn-Regler 12 bzw. 12a, 12b oder 12c können klassische PD- oder PID-Regler und deren Auslegungsverfahren verwendet werden. Für die Beurteilung des Zustandes eines Bahnreglers, werden die internen Reglergrößen (z.B. Proportionaler Abstand zwischen Soll- und Ist-Wert, oder Integratorinhalte und Annäherungsgeschwindigkeit an den Sollwert) betrachtet. Als Zustände werden z.B. "aktiv und Sollwert erreicht", "aktiv und Sollwert nicht erreicht" und "inaktiv" unterschieden. Für den über die Verbindung 10b an die Regler-Steuerung 10 übermittelten aktuellen Zustand, z.B. "aktiv und Sollwert erreicht" müssen in diesem Beispiel alle relevanten internen Reglergrößen innerhalb eines vordefinierten Wertebereichs liegen, anderfalls wird der Status "aktiv und Sollwert nicht erreicht" ausgegeben.

Der betreffende Bahn-Regler wird einem Fahrzeug-Regler 15 einer Fahrzeug-Steuerung 17 oder der Fahrzeug-Steuerung 17 direkt aufgeschaltet, wenn kein Fahrzeug-Regler 15 vorgesehen ist. Die Fahrzeug-Steuerung 17 umfaßt üblicherweise die Steuerorgane und gegebenenfalls deren Stellantriebe zur Betätigung derselben. Denkbar ist auch die Kontrolle über Schalterstellungen.

Beispielsweise weisen moderne Flugzeuge ein automatisches Steuerungssystem zur Steuerung und Stabilisierung des Flugzeugs auf. Die Steuerung ist dabei der Stabilisierung funktional übergeordnet. Dieser rechnet aus mittels Steuerknüppel vorgenommenen Piloteneingaben u.a. unter Berücksichtigung der Flugzeug-Eigenschaften und der Flugzustände im Raum Soll-Kommandos z.B. für die Stellantriebe der Steuerflächen, mit denen das Flugzeug stabil auf einer durch die Piloten-Eingaben bestimmten Sollbahn gehalten werden kann. Diese Soll-Kommandos werden zu diesem Zweck von dem Steuerungssystem elektrisch an die Stellantriebe übermittelt. Derartige Steuerungssysteme sind auch bei Kraftfahrzeugen realisiert worden. Auch dabei sind Stabilisierungs-Funktionen vorgesehen, wobei die Regelgrößen unterschiedlich zu den bei Flugzeugen verwendeten Steuerungssystemen sein kann. Das erfindungsgemäße Bahnführungs-System kann Steuerungssystemen, die allgemein für Fahrzeuge, d.h. Flugzeuge, Schiffe oder Straßen- und Land-Fahrzeuge bestimmt sind, zugeordnet werden. Das erfindungsgemäße automatische Bahnführungs-System kann jedoch auch für Fahrzeuge ohne derartiges automatisches Steuerungssystem angewendet werden. Das vom jeweiligen Bahn-Regler 12 bzw. 12a, 12b, 12c ermittelte Soll-Kommando wird also direkt oder über einen Fahrzeug-Regler 15 an die Steuerorgane des Anwendungs-Fahrzeugs, wie z.B. ein Lenkrad, ein Pilotenknüppel, einen Schubhebel oder ein Gaspedal bzw. deren Stellantriebe weitergegeben.

Weiterhin weist die Fahrzeug-Steuerung 17 eine Meßeinrichtung oder mehrere Meßeinrichtungen auf, die ihre Meßwerte an die Fahrzeug-Regler 15 bzw. den vorgesehenen Bahn-Reglern 12 bzw. 12a, 12b oder 12c übermitteln. Die für den Fahrzeug-Regler 15 vorgesehenen Rückführungs-Größen 18 können je nach dem Regelkonzept Zustandsgrössen der Stelleinheiten der Fahrzeug-Steuerung 15 zur Steuerung des Fahrzeugs wie z.B. eine Ist-Position einer Stelleinheit und / oder Zustandsgrössen des Fahrzeugs wie z.B. dessen Lage im Raum sein. Ebenso ist eine Rückführung solcher Größen an die Bahn-Regler 12 bzw. 12a, 12b oder 12c vorgesehen.

Die Einsatz-Steuerung 4 steuert den zeitlichen Ablauf der frei definierbaren Bahn-Abschnitte einer Einsatzphase. Beispielsweise folgt bei einem Flugzeug die Einsatzphase Steigflug dem Manöver "Start" (siehe voranstehendes Beispiel des Einsatz-Skript). Bei der Unterbrechung oder Änderung von Einsatzphasen, ist ein entsprechendes Einsatz-Skript oder zumindest ein Kommando des Einsatz-Skriptes zu erstellen und an die Einsatz-Steuerung 4 zu übermitteln.

Die verschiedenen Funktionen des Fahrzeug-Führungssystems 1, also die Einsatz-Steuerung 4, die Regler-Steuerung 10 und der Bahn-Regler 12 können in einem oder mehreren Hardware-Modulen implementiert sein. Vorzugsweise sind diese in einem Bahnführungsmodul implementiert. Alternativ dazu können zusätzlich die Fahrzeug-Regler 18 und gegebenenfalls weitere Funktionen in einem Hardware-Modul integriert sein.

Vorzugsweise sind dem Bahnführungsmodul weiterhin fahrzeugtypische Bahn-Regler (bei der Anwendung der Erfindung z.B. bezogen auf Fluggeschwindigkeit oder Anstellwinkel des Flugzeugs), Interpreter, Kontrollsoftware zur Programmbedienung (zur Ausführung von Benutzer-Kommandos wie "An/Aus", "Initialisieren", "Zeile überspringen"), Input/Output-Software zur Datenübertragung und andere Funktionen zugeordnet oder in diesem implementiert.

Im folgenden wird die Funktionsweise oder das Verfahren zur Durchführung der erfindungsgemäßen Bahn-Führung beschrieben:

Das Einsatz-Skript und die Regler-Matrix werden von einem Benutzer vorab definiert und über eine Datenleitung (Funk, Netzwerk, Datenbus, o.ä.) von einem beliebigen Arbeitsplatzrechner aus an den Missionscomputer im Fahrzeug übertragen. Bei der Definition des Einsatz-Skripts und der Regler-Matrix wird von den Typen der im Bahnführungssystem implementierten Bahn-Regler ausgegangen. Vor oder nach der Übertragung ist eine Verschlüsselung oder Komprimierung möglich. Die Einsatz-Steuerung 4 empfängt das Einsatz-Skript und die Regler-Matrix und liest diese, beispielsweise durch Aktivieren der Funktion "INITITALISIEREN", vollständig in einen entsprechenden Speicher ein, der das Einsatz-Skript und die Regler-Matrix für die Einsatz-Steuerung 4 verfügbar hält. Das Bahnführungssystem 1 besitzt einen Interpreter, der den Text sowohl des Einsatz-Skripts als auch der Regler-Matrix Kommandos in der Maschinensprache des Bahnführungsmoduls zuordnet. Der Pilot oder ein anderer Nutzer, z.B. auch einer Bodenstation, können Einsatzarten definieren, die mit den im Bahnführungssystem 1 implementierten Bahn- Reglern 12 bewerkstelligt werden können. Dabei werden aus Sollbahn-Abschnitten mittels des Einsatz-Skripts Einsatzarten definiert. Bei einer Definition oder Modifikation von Einsatzarten von einer Bodenstation kann in einer speziellen Ausführungsform der Erfindung das Einsatz-Skript 3 und optional auch die Regler-Matrix 2 per Telemetrie in das Bahnführungssystem 1 übertragen werden.

Über die funktionale Verbindung 7 oder einen anderen Übertragungsweg kann das Bahnführungssystem 1 aktuelle Informationen zur Mission an einen Arbeitsplatzrechner des Nutzers oder Operators zurückschicken, damit dieser die Einsätze des Fahrzeugs verfolgen und gegebenenfalls einen aktuellen Einsatz unterbrechen oder modifizieren kann.

Der Interpreter ist der Regler-Steuerung zugeordnet oder Teil derselben. Der Interpreter liest den Text und ordnet den im Einsatz-Skript verwendeten Wörtern auf Einsatzphasen bezogene Nummern und mittels der Regler-Matrix den Einsatzphasen Bahn-Regler zu.

Dies wird beispielhaft an der zweiten Kommandozeile "Start (Geschw = 120, Kurs = 180)" in einem Einsatz-Skript beschrieben: In der Manövertabelle (Figur 3) findet der Interpreter das Wort "*Start*" in Zeile 2. Also aktiviert er über die Regler-Steuerung alle Bahn-Regler, in deren Spalte die Ziffer "1" steht und de-aktiviert alle Bahn-Regler 12, wenn in der entsprechenden Spalte die Ziffer "0" steht. Der Interpreter erkennt ferner das Wort "*Geschw*" und ordnet diesem Kommando den Bahn-Regler 12 für Geschwindigkeit zu. Auf diese Weise wird diesem Bahn-Regler 12 der Sollwert "120" auf der Basis einer vorbestimmten Dimensionierung oder Normierung zugewiesen. Analog verfährt der Interpreter mit der Information "Kurs = 180". Sollte diese Information fehlen, dann wird ein voreingestellter Wert verwendet, und das Flugzeug in diese Richtung gesteuert.

Nach dem Starten der betreffenden Einsatzphase beispielsweise durch Drücken einer Funktionstaste "AN" beginnt das Bahnführungssystem 1 die jeweilige Kommando-Zeile des in der Einsatz-Steuerung 4 verfügbaren Einsatz-Skriptes 3 auszuführen.

Anschließend wird der erfindungsgemäße Ablauf bei der Ausführung der Kommandozeile 4 "*Reiseflug"* des dargestellten Einsatz-Skriptes beispielhaft erläutert, wobei dieses Verfahren auf beliebige andere Einsatzphasen bzw. Einsatzarten des Fahrzeugs anwendbar ist:
- Der Parameter für die Geschwindigkeit (200) wird einem Bahn-Regler 12a, hier einem Schubregler übergeben;
- der Parameter für den Kurs (110) wird einem weiteren Bahn-Regler 12b, hier einem Kursregler übergeben;
- der Parameter für die Flughöhe (= 5000) wird einem weiteren Bahn-Regler 12c, hier einem Höhenregler übergeben;
- die Einsatz-Steuerung 4 startet das Manöver "*Reiseflug"*;
- die Regler-Steuerung 10 startet hierzu gleichzeitig die Bahn-Regler (12a, 12b, 12c) für Geschwindigkeit, Kurs und Flughöhe entsprechend der Regler-Matrix;
- die aktivierten Bahn-Regler 12 sind bestrebt, das Fahrzeug auf die vorgegebenen Sollwerte einzustellen und zu halten; sobald ein Sollwert erreicht ist, wird dies der Regler-Steuerung 10 über die Verbindung 10b mitgeteilt;
- das Manöver "*Reiseflug"* ist beendet, wenn alle Bahn-Regler 12 ihre Sollwerte erreicht haben, oder wenn alternative Bedingungen erfüllt sind (z.B. Ort, Zeit, Zustände, Schalterstellungen)
- die Regler-Steuerung 10 teilt der Einsatz-Steuerung 4 mit, daß das Manöver *"Reiseflug"* beendet worden ist;
- die Einsatz-Steuerung 4 bearbeitet die nächste Kommandozeile für die nächste Einsatzphase aus dem Einsatz-Skript, in dem beschriebenen Beispiel die Einsatzphase "*Rechtskurve".*

## Patentansprüche

1. Bahnführungssystem zur Führung eines Fahrzeugs in Bezug auf Soll-Vorgaben zumindest einer Einsatzphase, wobei das Bahnführungssystem aufweist:
- eine Skript-Erstellungsfunktion (3) zur Erstellung eines Einsatz-Skriptes zur Beschreibung von Soll-Vorgaben von Einsatzphasen, nach denen das Fahrzeug zu führen ist,
- zumindest einen Bahn-Regler (12; 12a, 12b, 12c) zur Führung des Fahrzeugs in Bezug auf die Soll-Vorgaben,
- eine Eingabefunktion (2) zur Erstellung einer Regler-Matrix durch einen Nutzer zur Zuordnung von Bahn-Reglern den Einsatzphasen,
- eine Einsatz-Steuerung (4) zur Steuerung des zeitlichen Ablaufs der Einsatzphasen aufgrund von Soll-Vorgaben,
- eine Regler-Steuerung (10) zur Aktivierung des in der jeweiligen Einsatzphase relevanten Bahnreglers,
wobei der jeweils aktive Bahn-Regler (12; 12a, 12b, 12c) seinen Status zur Kontrolle an die Regler-Steuerung (10) übermittelt.
**dadurch gekennzeichnet, daß**
mittels der Eingabefunktion (2) eine Modifikation der Regler-Matrix aufgrund von veränderten Einsatzphasen jederzeit durch den Nutzer vornehmbar ist.

2. Bahnführungssystem zur Führung eines Fahrzeugs in Bezug auf Soll-Vorgaben zumindest einer Einsatzphase nach dem Anspruch 1, **dadurch gekennzeichnet, daß** die Übermittlung des Bahn-Regler-Status kontinuierlich erfolgt.

3. Bahnführungssystem zur Führung eines Fahrzeugs in Bezug auf Soll-Vorgaben zumindest einer Einsatzphase nach einem der voranstehenden Ansprüche, **dadurch gekennzeichnet, daß** das Einsatz-Skript während des Fahrzeug-Einsatzes von außen manipulierbar ist.

## Claims

1. Path guidance system for the guidance of a vehicle with reference to desired defaults of at least one operating phase, the path guidance system comprising:
- a script creating function (3) for the creation of an operation script for the description of desired defaults of operating phases according to which the vehicle is to be guided,
- at least one path controller (12; 12a, 12b, 12c) for the guidance of the vehicle with reference to the desired defaults,
- an input function (2) for the creation of a controller matrix by a user for the assignment of path controllers to the operating phases,
- an operation control system (4) for the control of the time sequence of the operating phases on the basis of desired defaults,
- a controller control system (10) for the activation of the path controller relevant in the respective operating phase,
the respectively active path controller (12; 12a, 12b, 12c) transmitting its status for checking to the controller control system (10),
**characterised in that**
by means of the input function (2) a modification of the controller matrix on account of altered operating phases can be carried out at any time by the user.

2. Path guidance system for the guidance of a vehicle with reference to desired defaults of at least one operating phase according to Claim 1, **characterised in that** the transmission of the path controller status is carried out continuously.

3. Path guidance system for the guidance of a vehicle with reference to desired defaults of at least one operating phase according to one of the preceding claims, **characterised in that** the operation script can be manipulated from outside during the vehicle operation.

## Revendications

1. Système de guidage de trajectoire pour guider un véhicule en se référant à des directives de consigne d'au moins une phase d'emploi, le système de guidage présentant :
- une fonction de création de script (3) pour créer un script de mise en service destiné à décrire des directives de consigne pour des phases d'emploi suivant lesquelles le véhicule doit être guidé,
- au moins un régulateur de trajectoire (12 ; 12a, 12b, 12c) pour guider le véhicule en se référant aux directives de consigne,
- une fonction d'entrée (2) pour créer une matrice de régulateur par un utilisateur afin d'associer aux phases d'emploi des régulateurs de trajectoire,
- une commande de mise en service (4) pour commander le déroulement dans le temps des phases d'emploi sur la base des directives de consigne,
- une commande du régulateur (10) pour activer le régulateur de trajectoire pertinent dans la phase d'emploi respective,
le régulateur de trajectoire respectivement actif (12 ; 12a, 12b, 12c) communiquant à la commande du régulateur (10) son statut pour le contrôle,
**caractérisé en ce qu'**
une modification de la matrice de régulateur peut être réalisée à tout moment par l'utilisateur à l'aide de la fonction d'entrée (2) sur la base des phases d'emploi modifiées.

2. Système de guidage de trajectoire pour guider un véhicule en se référant à des directives de consigne d'au moins une phase d'emploi selon la revendication 1
**caractérisé en ce que**
la transmission du statut du régulateur de trajectoire a lieu en continu.

3. Système de guidage de trajectoire pour guider un véhicule en se référant à des directives de consigne d'au moins une phase d'emploi selon l'une des revendications précédentes,
**caractérisé en ce que**
le script de mise en service peut être manipulé de l'extérieur pendant la mise en service du véhicule.
